# EUROPÄISCHE PATENTSCHRIFT

(11) **EP 0 685 680 B1**
(45) Veröffentlichungstag und Bekanntmachung des Hinweises auf die Patenterteilung: **30.09.1998**
(21) Anmeldenummer: 95108364.1
(22) Anmeldetag: 01.06.1995
(51) Int. Cl.: F16L 59/14, F24D 3/14, F16L 3/26

(54) **Dämmungsprofil**
Damping support
Support amortissant

(30) Priorität: 02.06.1994 DE 4419320
(43) Veröffentlichungstag der Anmeldung: 06.12.1995
(73) Patentinhaber: Hewing GmbH, D-48607 Ochtrup (DE)
(72) Erfinder: Riesselmann, Franz-Josef, D-49393 Lohne (DE)
(74) Vertreter: Hilleringmann, Jochen, Dipl.-Ing.

(56) Entgegenhaltungen:
- WO-A-86/01281
- DE-A- 3 525 190
- DE-A- 4 210 468
- GB-A- 1 403 714
- GB-A- 2 099 103
- GB-A- 2 257 490

## Beschreibung

Die Erfindung betrifft ein Dämmungsprofil für auf einem Untergrund zu verlegende insbesondere Warmwasser führende Leitungen, wie z.B. zur Heizkörperanbindung.

Dämmungen zur Wärmeisolation von Warmwasser führenden Leitungen sind z.B. aus DE 42 19 305 A1, DE 41 10 124 A1, DE 38 22 714 A1, DE 38 00 646 A1, DE 34 48 295 C2, DE 34 10 838 C2 und EP 0 158 188 B1 bekannt. Bei sämtlichen dieser Dämmungen ist die Leitung (Wasserrohrleitung) allseitig von einem Material umgeben, bei dem es sich insbesondere um wärmedämmendes Material handelt. Die Anordnung der zu isolierenden Leitung ist bei den bekannten Systemen recht aufwendig, da dies das Einziehen oder Umgeben der Leitung in bzw. durch eine Umhüllung voraussetzt. Ferner sind die bekannten Rundum-Isolierungen bzw. asymmetrischen Isolierungen (Dämmung mit Isolationsmaterial lediglich zwischen Leitung und Untergrund, wie z.B. nach den drei letzten oben aufgeführten Druckschriften vorgesehen) nicht standfest genug, so daß die Dämmung samt Leitung bei der Estrichbestellung aufschwemmen kann. Vor der Estrichbestellung sind die Zwischenräume zwischen der Leitungsisolation und der Bodenisolation mit einer isolierenden Schüttung (Perlite) aufzufüllen. Dies ist insofern nachteilig, da diese Schüttung vergessen werden kann.

Aus DE-A-35 25 190 ist eine Dämmanordnung für Rohrleitungen bekannt, bei der die Rohre in einer Aufnahmenut eines Dämmprofilkörpers untergebracht sind.

Der Erfindung liegt die Aufgabe zugrunde, ein Dämmungsprofil zu schaffen, das die einfache Anordnung der zu isolierenden Leitungen erlaubt, standfest ist und problemlos in den übrigen Bodenaufbau integrierbar ist.

Zur Lösung dieser Aufgabe wird mit der Erfindung ein Dämmungsprofil vorgeschlagen, das versehen ist mit einem geradlinigen und/oder gekrümmten Dämmkörper aus einem wärmedämmenden Schaummaterial, der eine Oberseite und eine Unterseite aufweist, wobei in der Oberseite mindestens eine in Erstreckung des Dämmkörpers verlaufende Aufnahmenut für eine wasserführende Leitung ausgebildet ist, während in der Unterseite des Dämmkörpers mehrere nebeneinanderliegende und quer zur Erstreckung des Dämmkörpers verlaufende Ausnehmungen ausgebildet sind.

Das erfindungsgemäße Dämmungsprofil weist einen Dämmkörper auf, der eine Oberseite und eine dieser gegenüberliegende Unterseite aufweist, die zur Auflage auf dem Untergrund vorgesehen ist. In der Oberseite sind ein oder mehrere nach oben offene (insbesondere geschlitzte) Aufnahmenuten (längliche Aufnahmevertiefungen) ausgebildet, die in Erstreckung des Dämmkörpers verlaufen. Der Dämmkörper, der geradlinig oder gekrümmt ausgebildet sein kann, besteht aus wärmedämmendem Material, insbesondere Polyurethan-(PUR-)Schaum. Das zur Wärmedämmung vorgesehene Material kann auch gleichzeitig die Aufgabe einer Schallisolation oder -dämpfung übernehmen.

Die Unterseite des Dämmkörpers ist erfindungsgemäß mit mehreren quer zur Erstreckung der Aufnahmenut oder -nuten verlaufenden Ausnehmungen ausgebildet, die sich über die gesamte Breite (Quererstreckung) des Dämmkörpers erstrecken und damit die beiden Seitenflächen des Dämmkörpers miteinander verbinden. Diese "Durchbrüche" können die von der oder den Aufnahmenuten aufzunehmenden Leitungen kreuzende Rohre bzw. Leitungen (z. B. Wasserrohre, Kabelleerrohre oder andere auf dem Untergrund aufliegende Leitungen) aufnehmen. Mittels des Dämmkörpers werden also kreuzende Rohre und/oder Leitungen ohne Höhensprung eines in einer Aufnahmenut angeordneten Rohres "überquert". Die Durchbrüche können unterschiedliche Querschnitte aufweisen, d. h. unterschiedlich abgestuft sein.

Bei dem erfindungsgemäßen Dämmungsprofil erstreckt sich die mindestens eine Aufnahmenut in der Oberseite des Dämmkörpers in dessen Verlaufsrichtung. Ist der Dämmkörper geradlinig, so erstreckt sich die Aufnahmenut ebenfalls geradlinig. Handelt es sich dagegen um einen gekrümmten Dämmkörper, so verläuft auch die Aufnahmenut krummlinig. Der Dämmkörper kann auch derart ausgebildet sein, daß er gekrümmte und geradlinige Abschnitte aufweist.

Die Verlegung des erfindungsgemäßen Dämmungsprofils und die Anordnung von zu isolierenden Leitungen ist denkbar einfach. Der Dämmkörper, der eine plane, nicht notwendigerweise durchgehende Auflagefläche aufweist, wird mit seiner Unterseite auf den Untergrund aufgesetzt. In die dem Untergrund abgewandte Oberseite des Dämmkörpers wird (werden) dann die Leitung (Leitungen) eingebracht, und zwar von oben in die Aufnahmenut (Aufnahmenuten) des Dämmkörpers. Die Querschnittsform des Dämmkörpers ist im wesentlichen ein Rechteck bzw. sie kommt nahe an diese Form heran, damit die in der Ebene des Dämmkörpers anzuordnenden sonstigen Wärme- und/oder Trittschallisolierungen bis bündig an die die Ober- und Unterseite des Dämmkörpers verbindenden Seitenflächen anliegen können. Ist das wärmedämmende Material des Dämmkörpers kompressibel, so brauchen die Seitenflächen nicht unbedingt (im wesentlichen) senkrecht zur Ober- bzw. Unterseite zu verlaufen, da sich der Dämmkörper an die Stoßflächen der angrenzenden sonstigen Bodenisolation anpaßt. Der Dämmkörper kann mittels geeigneter Befestigungsmittel (Schrauben, Kleben, Nageln etc.) auf den Untergrund befestigt werden.

Vorzugsweise sind in der Oberseite des Dämmkörpers insbesondere zueinander parallele Aufnahmenuten für den Vor- und Rücklauf eines Heizkörpers ausgebildet. Neben ein oder mehreren Aufnahmenuten für Heizungsrohrleitungen können auch noch Aufnahmenuten für Brauchwasser und/oder elektrische Leitungen vorgesehen sein, und zwar bevorzugt ebenfalls in der Oberseite. Der Abstand der Aufnahmenuten für wasserführende Rohre und elektrische Leitungen ist derart gewählt, daß kein elektrischer Übergang zwischen beiden gegeben ist. Der hohe spezifische Widerstand von PUR-Schaum unterstützt dies.

Vorzugsweise ist das wärme- und gegebenenfalls auch schalldämmende Material des Dämmkörpers flexibel (plastisch oder elastisch leicht verformbar). Um bei dies nicht so gut gewährenden Materialien dennoch eine Flexibilität des Dämmkörpers zu erzielen, ist gemäß einer Weiterbildung des erfindungsgemäßen Dämmungsprofils vorgesehen, daß der Dämmkörper die Ober- und die Unterseite miteinander verbindende Seitenflächen aufweist und daß die Seitenflächen jeweils eine zwischen der Ober- und der Unterseite verlaufende Rippung aufweisen.

Zweckmäßigerweise lassen sich mehrere Dämmkörper miteinander verbinden, d.h. unter Verbindung benachbarter Dämmkörper aufeinanderfolgend anordnen. Dies wird dadurch erreicht, daß der Dämmkörper an seinem einen stirnseitigen ein erstes Verbindungsmittel und seinem anderen stirnseitigen Ende ein zum ersten Verbindungsmittel insbesondere komplementäres zweites Verbindungsmittel zur Verbindung mit dem ersten Verbindungsmittel eines benachbarten Dämmkörpers aufweist.

Zweckmäßigerweise ist jede Aufnahmenut nach Einlegen eines Rohres verschließbar, insbesondere mittels eines Verschließstreifens aus wärmedämmendem Material. Dieser Verschließstreifen kann an der Oberseite des Dämmkörpers festgelegt werden, wobei er die in der Oberseite liegende Öffnung jeder Aufnahmenut überdeckt. Die Festlegung des Verschließmaterials kann insbesondere durch Verkleben oder mittels eines Klettverschlußsystems erfolgen. Die Verbindung von Verschließmaterial und Dämmkörper kann auch an anderen Stellen des Dämmkörpers als dessen Oberseite erfolgen; das Verschließmaterial wird dann über die Oberseite des Dämmkörpers gelegt.

Vorzugsweise ist das Verschließmaterial integraler Bestandteil des Dämmkörpers. Ist das Material des Dämmkörpers flexibel und/oder elastisch, so kann in der Oberseite des Dämmkörpers für jede Aufnahmenut ein Schlitz vorgesehen sein, der einen Zugang zur Aufnahmenut von der Oberseite her erlaubt. Der einstückig mit dem Dämmkörper verbundene Verschließstreifen wird dann "aufgeklappt", um das Rohr in die Aufnahmenut einzulegen. Wegen der Rückstelleigenschaften des Materials des Dämmkörpers legt sich der Verschließstreifen nach Einlegen des Rohres auf dieses und verschließt damit die Aufnahmenut.

Schließlich ist es auch noch möglich, das mindestens eine Rohr mit einer direkt bei der Herstellung des Dämmungsprofils produzierten und mit dem Dämmkörper verbundenen Isolierhaut abzudecken. Diese dünne Isolierhaut ist flexibel und läßt sich auf das mindestens eine Rohr bzw. auf die Oberseite des Dämmkörpers auflegen.

Der Vorteil der vorstehend beschriebenen Möglichkeiten des Verschließens der Oberseite des Dämmkörpers nach dem Einlegen eines Rohres in die mindestens eine Aufnahmenut besteht darin, daß ein "direkter" Kontakt (d.h. ohne Zwischenlage aus insbesondere wärmedämmendem Material) zwischen dem Rohr und dem Estrich verhindert wird, wenn eine Trittschalldämmung oberhalb des Dämmungsprofils nicht vorgesehen ist.

Nachfolgend werden anhand der Zeichnung Ausführungsbeispiele der Erfindung näher erläutert. Im einzelnen zeigen:
- Fig. 1: einen Querschnitt durch einen Bodenaufbau mit in diesem verlegten Dämmungsprofil für den Vor- und Rücklauf eines Heizkörpers,
- Fig. 2: eine Seitenansicht eines Dämmkörpers des Dämmungsprofils,
- Fig. 3: eine Draufsicht auf die Oberseite des Dämmkörpers gemäß III der Fig. 2,
- Fign. 4 und 5: stirnseitige Ansichten in Richtung der Pfeile IV und V der Fig. 2 und
- Fig. 6: eine stirnseitige Ansicht eines alternativen Dämmungsprofils mit geschlitzten Aufnahmenuten zum Verschließen derselben nach dem Einlegen eines Rohres.

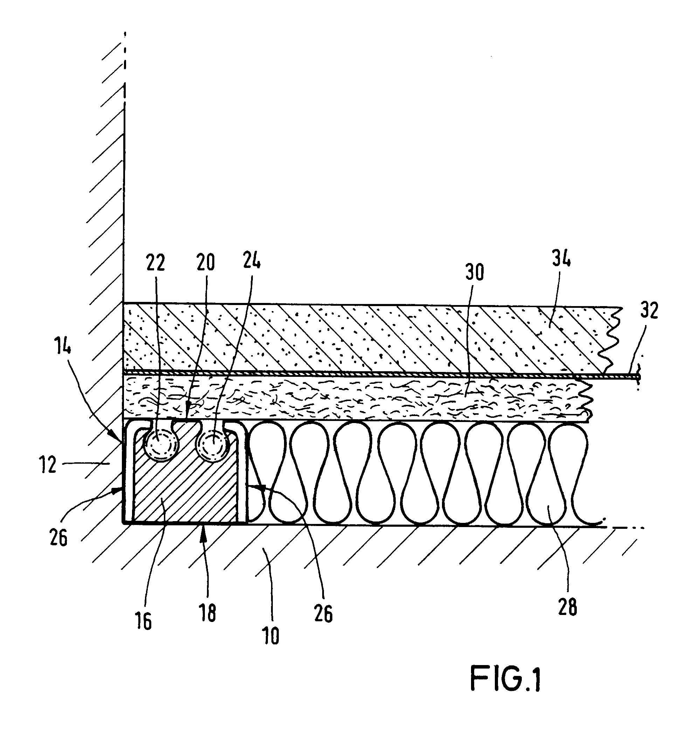

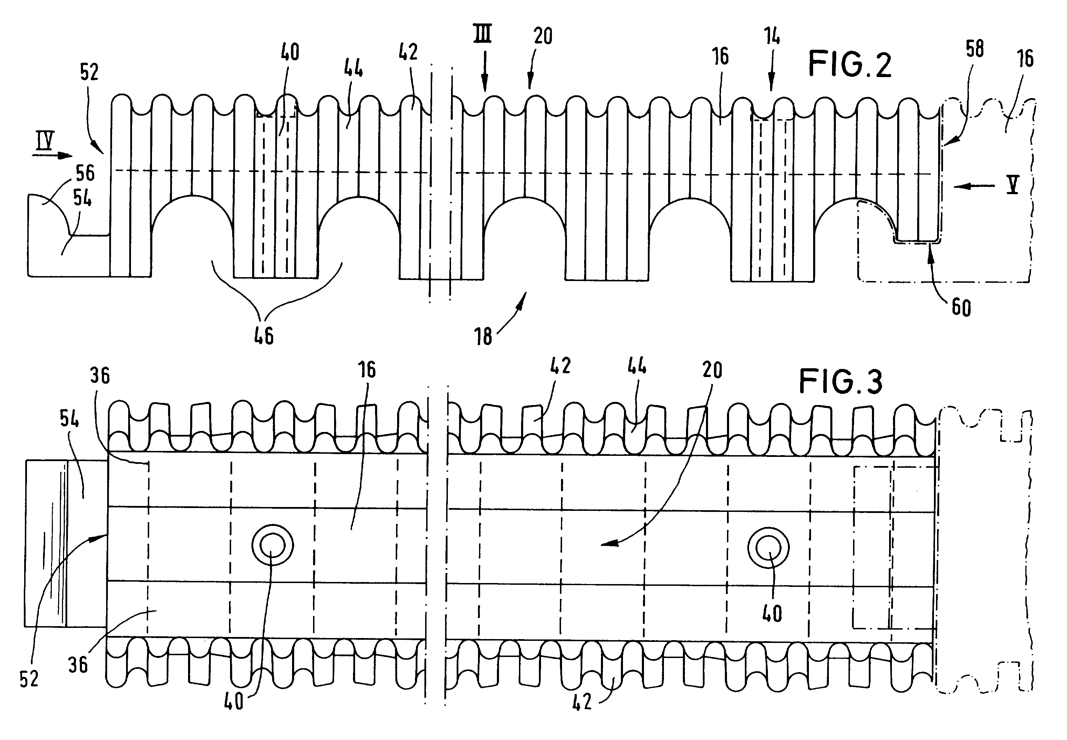

In Fig. 1 ist im Querschnitt der Aufbau eines Unterbodens samt Trittschall- und Wärmedämmung, Dämmungsprofil für die Heizkörperanbindung und Estrich dargestellt. Gemäß Fig. 1 wird in den Eckenbereich zwischen einem Untergrund 10 (beispielsweise Betonschicht) und einer (gemauerten) Wand 12 ein Dämmungsprofil 14 für die Vor- und die Rücklaufrohre eines Heizkörpers angeordnet. Das Dämmungsprofil besteht aus einem Dämmkörper 16 aus wärmedämmendem Material, nämlich Polyurethan-Schaum. Der Dämmkörper 16 liegt mit seiner Unterseite 18 auf dem Untergrund 10 auf. In der Oberseite 20 des Dämmkörpers 16 sind die bei 22 und 24 angedeuteten Heizungsrohre angeordnet, die von später noch anhand der Fign. 2 bis 6 zu beschreibenden Aufnahmenuten in der Oberseite 20 aufgenommen sind. Die eine der beiden die Seiten 18 und 20 des Dämmkörpers 16 verbindenden Seitenfläche 26 liegt an der Wand 12 an. Über die Höhe des Dämmkörpers 16 ist neben diesem eine Wärmedämmungsschicht 28 angeordnet, die im übrigen auf dem Untergrund 10 aufliegt. Diese Wärmedämmungsschicht 28 besteht in bekannter Weise aus wärmedämmendem Material, beispielsweise Polystyrol. Da das Dämmungsprofil 14 im Querschnitt im wesentlichen Rechteckform aufweist, liegt die Wärmedämmungsschicht 28, die bevorzugt aus einzelnen Platten besteht, mit ihrer Stoßseite im wesentlichen glatt an der Seitenfläche 26 des Dämmkörpers 16 an. Die Flexibilität und Kompressibilität des Material des Dämmkörpers 16 macht es möglich, daß sich zwischen dem Dämmkörper 16 und Wand 12 einerseits sowie Wärmedämmungsschicht 28 andererseits keine nennenswerten Zwischenräume bilden, und zwar auch dann nicht, wenn der Querschnitt des Dämmungsprofils 14 von der Rechteckform abweicht, etwa leicht trapezförmig ist.

Auf die Wärmedämmungsschicht 28 und die Oberseite 20 des Dämmkörpers 16 ist eine Trittschalldämmungsschicht 30 aufgebracht. Diese Trittschalldämmungsschicht 30 besteht ebenfalls aus einzelnen nebeneinanderliegenden Platten. Auf der Trittschalldämmungsschicht 30 ist eine Folie 32 aufgebracht, auf der sich der Estrich 34 befindet. Die Folie 32 hat die Aufgabe, die darunterliegenden Dämmungsschichten 30,28 sowie das Dämmungsprofil 14 vor Feuchtigkeit zu schützen. Auf der Estrichschicht 34 ist dann der Oberboden aufgebracht, der in Fig. 1 nicht dargestellt ist.

Wie man anhand von Fig. 1 erkennen kann, ist das Dämmungsprofil 14 aufgrund seiner Außenquerschnittsform insofern recht verlegefreundlich, als sich neben und über dem Dämmungsprofil problemlos ohne Zwischenräume die Wärme- und Trittschalldämmungen anordnen lassen.

Das Dämmungsprofil 14 ist in den Fign. 2 bis 6 im einzelnen dargestellt. Das Dämmungsprofil 14 besteht aus den einzelnen Dämmkörpern 16, bei denen es sich in diesem Ausführungsbeispiel um geradlinige langgestreckte Teile handelt. Wie in den Figuren gezeigt, befinden sich in der Oberseite 20 des Dämmkörpers 16 zwei nebeneinanderliegende Aufnahmenuten 36, die zur Oberseite 20 hin offen sind. Die Aufnahmenuten 36 weisen einen im wesentlichen runden Querschnitt auf, wobei sich ihre in der Oberseite 20 liegenden Öffnungen 38 über weniger als 180°, insbesondere weniger als 90°, erstrecken. Zwischen den beiden geradlinig verlaufenden Aufnahmenuten 36 sind mehrere Durchgangslöcher 40 angeordnet, die sich durch den Dämmkörper 16 über dessen gesamte Höhe erstrecken und insofern die Unterseite 18 mit der Oberseite 20 verbinden. Durch Hindurchführung geeigneter Befestigungsmittel (nicht dargestellt), wie beispielsweise Schrauben, Nägel, Bolzen o.dgl., läßt sich der Dämmkörper 16 auf dem Untergrund befestigen.

Wie anhand insbesondere der Fign. 3 bis 6 dargestellt, weist der Dämmkörper 16 ein leicht trapezförmiges Profil mit oberen abgerundeten Kanten auf. Die Seitenflächen 26 des Dämmkörpers 16 sind mit einer Rippung bestehend aus Vorsprüngen 42 und Vertiefungen 44 versehen. Die Vorsprünge 42 und Vertiefungen 44 erstrecken sich jeweils zwischen der Unterseite 18 und der Oberseite 20 des Dämmkörpers 16 geradlinig. Durch die Ausgestaltung der Seitenflächen 26 wird eine verbesserte Flexibilität des an sich bereits aus flexiblem Material bestehenden Dämmkörpers 16 erzielt. Aufgrund der Rippung ist eine Verlegung von Leitungsrohren mittels des Dämmungsprofils 14 bei (horizontaler) Krümmung bzw. Verbiegung des Profils 14 möglich, ohne daß sich übermäßige Aufwerfungen und Zugspannungen an der Innen- bzw. Außenseite (Seitenflächen 26) des Dämmungsprofils 14 einstellen.

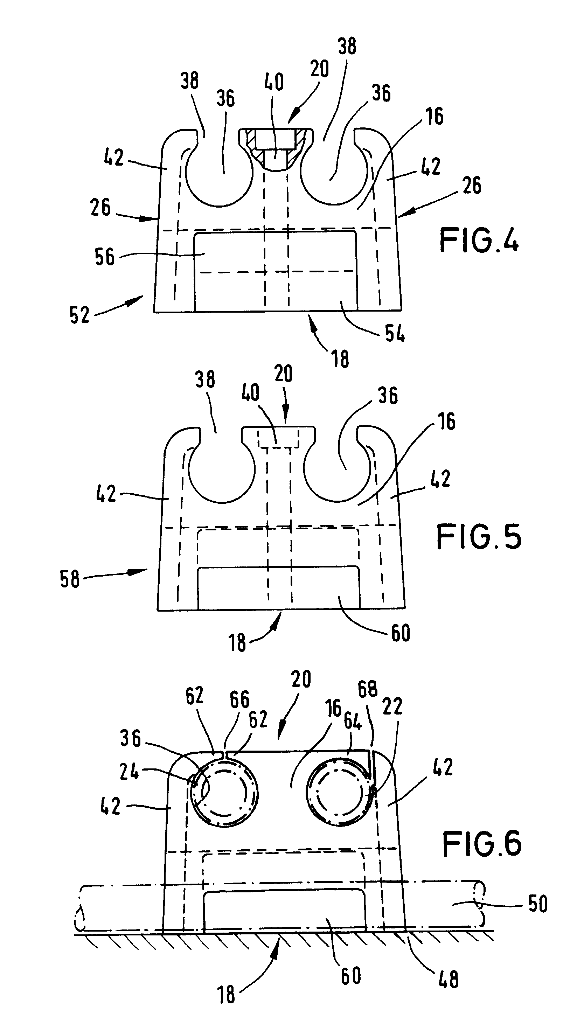

Gemäß den Figuren ist der Dämmkörper 16 an seiner Unterseite 18 mit mehreren querverlaufenden Ausnehmungen oder Durchbrüchen 46 versehen, die zur Unterseite 18 hin offen sind und die beiden Seitenflächen 26 miteinander verbinden. Obwohl in den Figuren anders dargestellt, können diese Durchbrechungen 46 unterschiedliche abgestufte Querschnitte aufweisen. Aufgabe der Durchbrechungen 46 des Dämmkörpers 16 ist es, das Dämmungsprofil 14 für die Rohre 22,24 über quer zu diesen verlaufende Rohre bzw. Leitungen verlegen zu können, ohne daß es zu einem Höhensprung kommt. Diese Situation ist für ein zweites Ausführungsbeispiel in Fig. 6 dargestellt, wo auf einem Untergrund 48 eine beispielsweise Kaltwasserleitung 50 verläuft, die von dem Dämmkörper 16 des Dämmungsprofils 14 für die Vor- und Rücklaufrohre 22,24 überbrückt wird. Auf gleiche Weise lassen sich auch elektrische Leitungen, die auf dem Untergrund 48 liegen, überbrücken.

Das Dämmungsprofil 14 besteht, wie in den Fign. 2 und 3 angedeutet, aus mehreren einzelnen nebeneinander angeordneten Dämmkörpern 16, die untereinander verbunden sind. Zu diesem Zweck ist das eine stirnseitige Ende 52 eines Dämmkörpers 16 mit einem in Erstreckung des Dämmkörpers 16 abstehenden von unten hochragenden Hakenteil 54 versehen, das einstückig mit dem Dämmkörper 16 ausgebildet ist und wie dieser aus dem wärmedämmenden Material besteht. Das hochstehende Ende 56 des Hakens 54 weist eine im wesentlichen über 90° gekrümmte dem stirnseitigen 52 zugewandte Außenfläche auf. Das Hakenteil 54 untergreift das (andere) stirnseitige Ende 58 eines benachbarten Dämmkörpers 16, der an diesem Ende mit einer Aussparung 60 versehen ist, die das stirnseitige Ende 58 mit der von dort aus betrachtet ersten Durchbrechung 46 verbindet. Damit taucht das hochstehende Ende 56 des Hakenteils 54 von unten in die erste Durchbrechung 46 ein (s. Fig. 2). Das hochstehende Ende 56 ist, wie sich ebenfalls aus Fig. 2 ergibt, der Innenfläche der Durchbrechung 46 angepaßt, die ebenfalls gekrümmt ist, und zwar in ihrem Firstbereich über 180°.

Fig. 6 zeigt ein Dämmungsprofil gemäß zweier weiterer Ausführungsbeispiele. Der Dämmkörper dieses Dämmungsprofils unterscheidet sich von demjenigen gemäß Fign. 1 bis 5 dadurch, daß die Öffnungen 38 der Aufnahmenuten 36 mittels Verschließstreifen 62,64 verschließbar sind. Die Verschließstreifen 62 sind zu beiden Längsseiten einer Aufnahmenut 36 an der Oberseite des Dämmkörpers 16 angeordnet und einstückig mit diesem verbunden (siehe linker Teil von Fig. 6). Zwischen den beiden Verschließstreifen 62 einer Aufnahmenut ist ein Schlitz 66 vorgesehen. Gemäß dem rechten Teil der Fig. 6 kann zum Verschließen einer Aufnahmenut 36 auch lediglich ein Verschließstreifen 64 vorgesehen sein, der die gesamte Öffnung der Aufnahmenut 36 überdeckt, wobei sich ein Schlitz 68 zwischen dem Verschließstreifen 64 und dem gegenüberliegenden Rand der Aufnahmenut bildet. In beiden hier angesprochenen und in Fig. 6 dargestellten Fällen, die bei ein und demselben Dämmungsprofil nicht gleichzeitig realisiert sein müssen, ist die Öffnung der Aufnahmenuten 36 zur Oberseite 20 des Dämmkörpers 16 hin verschlossen (wenn man einmal von den Schlitzen 66,68 absieht). Die Verschließstreifen 62,64 werden zum Einlegen der Rohre 22,24 nach oben gebogen, um, nach dem Einlegen der Rohre 22,24 aufgrund der Rückstelleigenschaften des PUR-Schaumes des Dämmkörpers 16, sich von oben auf die Rohre 22,24 zu legen, womit die Aufnahmenuten 36 wieder verschlossen sind.

## Patentansprüche

1. Dämmungsprofil für auf einem Untergrund zu verlegende wasserführende Leitungen, insbesondere zur Heizkörperanbindung, mit
- einem geradlinigen und/oder gekrümmten Dämmkörper (16) aus einem wärmedämmenden Schaumstoffmaterial, der eine Oberseite (20) und eine Unterseite (18) aufweist,
- wobei in der Oberseite (20) mindestens eine in Erstreckung des Dämmkörpers (16) verlaufende Aufnahmenut (36) für eine wasserführende Leitung (22,24) ausgebildet ist,
**dadurch gekennzeichnet,**
- daß in der Unterseite (18) des Dämmkörpers (16) mehrere nebeneinanderliegende und quer zur Erstreckung des Dämmkörpers (16) verlaufende Ausnehmungen (46) ausgebildet sind.

2. Dämmungsprofil nach Anspruch 1, dadurch gekennzeichnet, daß der Dämmkörper (16) aus Polyurethan-Schaumstoff besteht.

3. Dämmungsprofil nach Anspruch 1, dadurch gekennzeichnet, daß in der Oberseite (20) des Dämmkörpers (16) mindestens zwei nebeneinanderliegende Aufnahmenuten (36) vorgesehen sind.

4. Dämmungsprofil nach einem der Ansprüche 1 bis 3, dadurch gekennzeichnet, daß der Dämmkörper (16) aus einem flexiblen, insbesondere elastischen Material besteht und/oder flexibel, insbesondere elastisch ausgebildet ist.

5. Dämmungsprofil nach Anspruch 4, dadurch gekennzeichnet, daß der Dämmkörper (16) die Ober- und die Unterseite (20,18) miteinander verbindende Seitenflächen (26) aufweist und daß die Seitenflächen (26) jeweils eine zwischen der Ober- und der Unterseite (20,18) verlaufende Rippung aufweisen.

6. Dämmungsprofil nach einem der Ansprüche 1 bis 5, dadurch gekennzeichnet, daß der Dämmkörper (16) an seinem einen stirnseitigen Ende (52) ein erstes Verbindungsmittel und seinem anderen stirnseitigen Ende (58) ein zum ersten Verbindungsmittel insbesondere komplementäres zweites Verbindungsmittel zur Verbindung mit dem ersten Verbindungsmittel eines benachbarten Dämmkörpers (16) aufweist.

7. Dämmungsprofil nach Anspruch 6, dadurch gekennzeichnet, daß das erste Verbindungsmittel ein Hakenteil (54) und das zweite Verbindungsmittel eine Ausnehmung (60) ist.

8. Dämmungsprofil nach einem der Ansprüche 1 bis 7, dadurch gekennzeichnet, daß jede Aufnahmenut (36) verschließbar ist.

9. Dämmungsprofil nach Anspruch 8, dadurch gekennzeichnet, daß jede Aufnahmenut (36) mittels eines Verschließstreifens (62,64) aus wärmedämmendem Material verschließbar ist.

10. Dämmungsprofil nach Anspruch 9, dadurch gekennzeichnet, daß die Verschließstreifen (62,64) auf die Oberseite (20) des Dämmkörpers (16) auflegbar und/oder an dem Dämmkörper (16), insbesondere an dessen Oberseite (20) befestigbar, insbesondere aufklebbar sind.

11. Dämmungsprofil nach Anspruch 9, dadurch gekennzeichnet, daß der Verschließstreifen (62,64) einstückig mit dem Dämmkörper (16) ausgebildet ist.

12. Dämmungsprofil nach Anspruch 11, dadurch gekennzeichnet, daß jede Aufnahmenut (36) einen in der Oberseite (20) des Dämmkörpers (16) angeordneten Schlitz (66,68) aufweist.

## Claims

1. An insulating profile for water-carrying conduits to be installed on a substrate, in particular for connecting radiators, comprising
- a straight and/or curved insulating body (16) of a heat insulating foamed material having an upper (20) and a lower surface (18),
- the upper surface (20) being formed with at least one receiving groove (36) for a water-carrying conduit (22, 24), the groove extending in the longitudinal direction of the insulating body (16),
characterized in
that the lower surface (18) of the insulating body (16) is provided with a plurality of adjacent recesses (46) extending in the transversal direction of the insulating body (16).

2. The insulating profile of claim 1, characterized in that the insulating body (16) is made of foamed polyurethane material.

3. The insulating profile of claim 1, characterized in that the upper surface (20) of the insulating body (16) is provided with at least two adjacent receiving grooves (36).

4. The insulating profile of one of claims 1 to 3, characterized in that the insulating body (16) is made of a flexible, in particular an elastic material and/or is of a flexible, in particular an elastic structure.

5. The insulating profile of claim 4, characterized in that the insulating body (16) comprises lateral surfaces (26) connecting the upper and lower surfaces (20, 18) and that the lateral surfaces (26) each have ribs extending between the upper and the lower surfaces (20, 18).

6. The insulating profile of one of claims 1 to 5, characterized in that the insulating body (16) has a first connecting means at one end (52) and has the other end (58) provided with a second connecting means, on particular complementary with the first connecting means, for connection to a first connecting means of an adjacent insulating body (16).

7. The insulating profile of claim 6, characterized in that the first connecting means is a hook member (54) and the second connecting means is a recess (60).

8. The insulating profile of one of claims 1 to 7, characterized in that each receiving groove (36) is adapted to be closed.

9. The insulating profile of claim 8, characterized in that each receiving groove (36) may be closed using a closing strip (62, 64) of heat insulating material.

10. The insulating profile of claim 9, characterized in that the closing strips (62, 64) may be placed on the upper surface (20) of the insulating body (16) and/or may be fastened, in particular adhered, to the insulating body (16), in particular on the upper surface (20) thereof.

11. The insulating profile of claim 9, characterized in that the closing strip (62, 64) is formed integrally with the insulating body (16).

12. The insulating profile of claim 11, characterized in that each receiving groove (36) has a slit (66, 68) arranged in the upper surface (20) of the insulating body (16).

## Revendications

1. Profil calorifuge pour conduites d'eau destinées à être installées sur une surface, particulièrement pour le raccord de radiateurs, comprenant
- un corps isolant (16) rectiligne et/ou courbé en un matériau alvéolaire calorifuge, le corps ayant une face supérieure (20) et une face inférieure (18),
- la face supérieure (20) étant prévue avec au moins une rainure réceptrice (36) s'étendant dans la direction longitudinale dudit corps isolant (16) pour recevoir une conduite d'eau (22, 24),
caractérisé en ce que
- la face inférieure (18) dudit corps isolant (16) est prévue de plusieurs creux (46) adjacents, qui s'étendent transversalement au direction longitudinale dudit corps isolant (16).

2. Profil calorifuge selon la revendication 1, caractérisé en ce que le corps isolant (16) est en matériau alvéolaire de polyuréthanne.

3. Profil calorifuge selon la revendication 1, caractérisé en ce que la face supérieure (20) dudit corps isolant (16) est prévue d'au moins deux rainures réceptrices (36) adjacentes.

4. Profil calorifuge selon une des revendications 1 à 3, caractérisé en ce que le corps isolant (16) est en un matériau flexible, en particulier élastique, est/ou qu'il a une structure flexible, en particulier élastique.

5. Profil calorifuge selon la revendication 4, caractérisé en ce que ledit corps isolant (16) a des faces latérales (26) raccordant la face supérieure (20) et la face inférieure (18) et en ce que les faces latérales (26) sont respectivement prévues d'une nervure s'étendant entre les faces supérieures et inférieures (20, 18).

6. Profil calorifuge selon une des revendications 1 à 5, caractérisé en ce que ledit corps isolant (16) est prévu de premiers moyens de raccord, à sa première face de bout (52), et qu'il est prévu à l'autre face de bout (58) de deuxièmes moyens de raccord, en particulier complémentaires aux premiers moyens de raccord, pour être raccordés aux premiers moyens de raccord d'un corps isolant (16) avoisinant.

7. Profil calorifuge selon la revendication 6, caractérisé en ce que les premiers moyens de raccord sont sous forme d'un élément crochet (54) et les deuxièmes moyens de raccord sont sous forme d'une évidement (60).

8. Profil calorifuge selon une des revendications 1 à 7, caractérisé en ce que chaque rainure réceptrice (36) peut être fermée.

9. Profil calorifuge selon la revendication 8, caractérisé en ce que chaque rainure réceptrice (36) peut être fermée par une bande de fermeture (62, 64) en matériau calorifuge.

10. Profil calorifuge selon la revendication 9, caractérisé en ce que les bandes de fermetures (62, 64) peuvent être placées sur la face supérieure (20) dudit corps isolant (16) et/ou peuvent être affixées, en particulier collées, au corps isolant (16), en particulier a la face supérieure (20) du dernier.

11. Profil calorifuge selon la revendication 9, caractérisé en ce que la bande de fermeture (62, 64) est formée en une seule pièce avec le corps isolant (16).

12. Profil calorifuge selon la revendication 11, caractérisé en ce que chaque rainure réceptrice (36) est prévue d'une fente (66, 68) dans la face supérieure (20) du corps isolant (16).
